# EUROPEAN PATENT APPLICATION

(11) **EP 2 634 209 A1**
(43) Date of publication of application: **04.09.2013**
(21) Application number: 11835985.0
(22) Date of filing: 27.09.2011
(51) Int. Cl.: C08J 7/04, B32B 27/18, B32B 27/36, G02B 1/10, G02B 5/30

(54) **POLYESTER FILM HAVING COATING LAYER**

(30) Priority: 27.10.2010 JP 2010240622
(71) Applicant: Mitsubishi Plastics, Inc., Tokyo 100-8252 (JP)
(72) Inventor: HAYASHIZAKI, Keiichi, Maibara-shi Shiga 521-0234 (JP)
(74) Representative: Ter Meer Steinmeister & Partner
(86) International application number: PCT/JP2011/072006
(87) International publication number: WO 2012/056845

(57) **Abstract**

The present invention provides a highly transparent base material for a polarizing plate-protecting film which is excellent in antistatic property, chemical resistance, mar resistance, handling property, transparency, etc., can be readily subjected to inspection for detecting fine defects or the like, can exhibit an excellent property of preventing deposition of adhesives, dusts or the like thereonto, for example, when used in the applications such as liquid crystal display panels, can be readily peeled off when released and removed from a polarizing plate as an unnecessary material after terminating its role of protecting the polarizing plate, can exhibit an effect of suppressing electrification of the polarizing plate upon peeling, and can prevent circuits connected to the liquid crystal display panel from suffering from failures or the like owing to the electrification upon peeling. The present invention relates to a polyester film with coating layer comprising a polyester base film and a coating layer formed on at least one surface of the polyester base film, the coating layer comprising carbon nanotubes, a fluorine-based repellant and an alkyltrialkoxysilane compound.

## Description

### TECHNICAL FIELD

The present invention relates to a film having an excellent antistatic property, and more particularly, to a film having adequate repellency and printability which can be suitably used as a base material for a polarizing plate-protecting film as used for protecting a surface of a polarizing plate in a liquid crystal display panel when attached thereonto through an adhesive, etc.

### BACKGROUND ART

In general, a liquid crystal display panel is produced by sealing a liquid crystal between two substrates to obtain a liquid crystal cell and then laminating a polarizing plate on both surfaces of the thus obtained liquid crystal cell. In order to prevent occurrence of flaws and deposition of dusts on a surface of the polarizing plate during a transportation process upon production of the liquid crystal display panel or during an assembling process of various display equipments such as computers, word processors and TVs, a protecting film is attached onto the surface of the polarizing plate. The protecting film may be provided thereon with printed information with respect to polarizing direction, lot number or the like. The protecting film is peeled off and removed from the polarizing plate as an unnecessary material after terminating its role for protecting the polarizing plate. When peeling off and removing the protecting film, there has been usually used such a method in which a rubber-based adhesive tape is pressed against the protecting film and raised up together therewith.

Hitherto, as the above protecting film, there are used polyethylene films, ethylene-vinyl acetate copolymer films or the like. However, these protecting films may become obstructive upon conducting inspection of a liquid display panel accompanied with optical evaluation for a display performance, a hue or a contrast of the liquid display panel, inclusion of foreign matter therein, or the like. For this reason, there tends to occur such a drawback that the protecting film is temporarily released upon the inspection and attached again thereonto after completion of the inspection.

As a protecting film which need not be peeled off upon inspection accompanied with the above optical evaluation, there has been proposed the protecting film obtained by laminating an optically isotropic adhesive resin layer on an optically isotropic base film (Patent Document 1). However, the base film used in the protecting film is produced by a casting method, and therefore substantially unoriented and kept almost in an amorphous state. As a result, the protecting film tends to be insufficient in chemical resistance, mar resistance or the like.

In addition, there has been proposed the film having an antistatic property and an antifouling property (Patent Document 2). However, the film tends to be insufficient in economy, printability or the like.

### PRIOR ART DOCUMENTS

### Patent Documents

Patent Document 1: Japanese Patent Application Laid-Open (KOKAI) No. 4-30120
Patent Document 2: Japanese Patent Application Laid-Open (KOKAI) No. 2007-31712

### SUMMARY OF THE INVENTION

### Problems to be Solved by the Invention

The present invention has been accomplished to solve the above conventional problems. An object of the present invention is to provide a highly transparent base material for a polarizing plate-protecting film which is excellent in antistatic property, chemical resistance, mar resistance, handling property, transparency, etc., can be readily subjected to inspection for detecting fine defects or the like, can exhibit excellent properties such as a property of preventing deposition of adhesives, dusts or the like onto a liquid crystal display panel, can be readily peeled off when released and removed from the polarizing plate as an unnecessary material after terminating its role of protecting the polarizing plate, can exhibit the effect of suppressing electrification of the polarizing plate upon peeling, and can prevent circuits connected to the liquid crystal display panel from suffering from failures or the like owing to the electrification upon peeling.

### Means for Solving Problems

As a result of the present inventors' earnest study, it has been found that the above problems can be readily solved by a specific film. The present invention has been attained on the basis of this finding.

That is, in an aspect of the present invention, there is provided a polyester film with coating layer comprising a polyester base film and a coating layer formed on at least one surface of the polyester base film, the coating layer comprising carbon nanotubes, a fluorine-based repellant and an alkyltrialkoxysilane compound.

### EFFECT OF THE INVENTION

According to the present invention, there is provided a base material for a polarizing plate-protecting film which is excellent in transparency, antistatic property, chemical resistance, mar resistance, handling property, etc., can allow facilitated inspection for a high-precision liquid crystal display panel or the like, and can exhibit excellent properties such as a property of preventing deposition of adhesives, dusts or the like onto a liquid crystal display panel. Also, the base material for a polarizing plate-protecting film according to the present invention can be readily peeled off when released and removed from a polarizing plate as an unnecessary material after terminating its role of protecting the polarizing plate, can exhibit an effect of suppressing electrification of the polarizing plate upon peeling, and can prevent circuits connected to the liquid crystal display panel from suffering from failures or the like owing to the electrification upon peeling. Therefore, the present invention has a high industrial value.

### PREFERRED EMBODIMENTS FOR CARRYING OUT THE INVENTION

The base material for a polarizing plate-protecting film according to the present invention is attached onto a surface of a polarizing plate of a liquid crystal display panel through an adhesive, etc. In the preferred embodiment of the present invention, the antistatic layer as the coating layer is provided on its opposite surface with an adhesive layer, and further a release film is laminated on a surface of the adhesive layer. The base material for a polarizing plate-protecting film according to the present invention is generally produced through sequential steps including a coating layer forming step, an adhesive layer forming step and a release film laminating step.

The polyester film (hereinafter occasionally referred to merely as a "film") used in the present invention means a film produced by subjecting a sheet melt-extruded from an extrusion die by a so-called extrusion method to drawing and orientation.

The polyester constituting the above film means a polyester obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyester include polyethylene terephthalate (PET) and polyethylene-2,6-naphthalenedicarboxylate (PEN).

The above polyester may be in the form of a copolymer comprising a third component. Examples of the dicarboxylic aid component of the copolyester include isophthalic acid, phthalic acid, terephthalic acid, 2,6-naphthalenedicarboxylic acid, adipic acid, sebacic acid and oxycarboxylic acids (such as, for example, p-oxybenzoic acid). Examples of the glycol component of the copolyester include ethylene glycol, diethylene glycol, propylene glycol, butanediol, 1,4-cyclohexanedimethanol and neopentyl glycol. The dicarboxylic acid components and the glycol components may be respectively used in combination of any two or more thereof.

The film of the present invention preferably comprises particles in view of a good handling property thereof unless the use of the particles in the film has no adverse influence on a transparency of the film. Examples of the particles include particles of silicon dioxide, calcium carbonate, aluminum oxide, titanium dioxide, kaolin, talc, zeolite, lithium fluoride, barium sulfate and carbon black as well as refractory polymer fine particles as described in Japanese Patent Publication (KOKOKU) No. 59-5216(1984). These particles may be used in combination of any two or more kinds thereof. The average particle diameter of the particles is usually 0.02 to 2 *µ*m, preferably 0.05 to 1.5 *µ*m and more preferably 0.05 to 1 *µ*m. The content of the particles in the film is usually 0.01 to 2% by weight and preferably 0.02 to 1% by weight.

The particles may be incorporated film into the film by any conventionally known methods. For example, the particles may be added in any optional stage of the production process of a polyester. The particles are preferably added in the form of a slurry prepared by dispersing the particles in ethylene glycol in the esterification stage or in the stage after completion of the transesterification reaction but before initiation of the polycondensation reaction to thereby allow the polycondensation reaction to proceed. In addition, there may also be used the method of blending a slurry prepared by dispersing the particles in ethylene glycol or water with the polyester raw material using a vented kneading extruder, a method of blending the dried particles with the polyester raw material using a kneading extruder, and the like.

The film may be usually produced by such a method in which a sheet melt-extruded from an extrusion die according to an extrusion method is biaxially drawn and oriented in longitudinal and lateral directions thereof.

In the extrusion method, a polyester is melted and extruded from an extrusion die, and cooled and solidified on a chilled drum, thereby obtaining a undrawn sheet. In this case, in order to improve a flatness of the sheet, it is necessary to enhance adhesion between the sheet and the rotary chilled drum. For this purpose, an electrostatic pinning method or a liquid coating adhesion method are preferably adopted. The electrostatic pinning method is the method in which a wire electrode is usually suspended on the side of an upper surface of the sheet in the direction perpendicular to a flow of the sheet, and a D.C. voltage of about 5 to about 10 kV is applied to the electrode to impart an electrostatic charge to the sheet and thereby improve adhesion between the sheet and the drum. On the other hand, the liquid coating adhesion method is the method in which a liquid is uniformly applied onto a part (for example, only portions contacting with both end portions of the sheet) or a whole portion of a surface of the rotary chilled drum to improve adhesion between the drum and the sheet. In the present invention, these methods may be used in combination with each other, if required.

The method of biaxially drawing and orienting the film is not particularly limited, and there may be used a simultaneous biaxially drawing method, a sequential biaxially drawing method, etc. In the simultaneous biaxial drawing method, the above undrawn sheet is drawn and oriented in both of the machine and width directions at the same time while maintaining the sheet in a suitable temperature-controlled condition at a temperature of usually 70 to 120°C and preferably 80 to 110°C. The draw ratio used in the simultaneous biaxial drawing method is 4 to 50 times, preferably 7 to 35 times and more preferably 10 to 20 times in terms of an area ratio of the film. Successively, the biaxially drawn sheet is heat-treated at a temperature of 170 to 250°C under tension or under relaxation within 30% to obtain a biaxially oriented film. In the sequential biaxially drawing method, the above undrawn sheet was monoaxially drawn using a roll-type or tenter-type drawing machine. In this case, the drawing temperature is usually 70 to 120°C and preferably 80 to 110°C, and the draw ratio is usually 2.5 to 7 times and preferably 3.0 to 6 times. Next, the thus monoaxially drawn sheet is drawn in the direction perpendicular to the drawing direction of the first stage. In this case, the drawing temperature is usually 70 to 120°C and preferably 80 to 115°C, and the draw ratio is usually 3.0 to 7 times and preferably 3.5 to 6 times. Successively, the resulting biaxially drawn sheet is heat-treated at a temperature of 170 to 250°C under a tension or under relaxation within 30% to obtain a biaxially oriented film.

Upon the above drawing steps, there may also be used the method in which the drawing step in each direction is carried out in two or more stages. In such a case, the respective multi-stage drawing steps are preferably performed such that the total draw ratio in each of the two directions is finally fallen within the above-specified range. In addition, if required, the resulting film may be drawn again in longitudinal and/or lateral directions thereof before or after conducting the heat treatment.

In the present invention, the thickness of the resulting film is not particularly limited, and is usually 5 to 150 *µ*m, preferably 10 to 100 *µ*m and more preferably 25 to 75 *µ*m. When the thickness of the film is less than 5 *µ*m, the film tends to be deteriorated in capability of protecting a surface of a liquid crystal display panel, and further tends to exhibit a poor handling property upon subsequent scratch-resistant layer forming step or adhesive layer forming step. When the thickness of the film is more than 150 *µ*m, there tend to arise the problems including not only high production costs, but also a poor handling workability of the film as a protecting film owing to deterioration in flexibility and total light transmittance, and failure to conduct inspection of a liquid crystal display panel accompanied with optical evaluation for display performance, hue and contrast of the liquid crystal display panel, inclusion of foreign matters therein, or the like.

The present invention has also been accomplished based on the finding that a carbon nanotube conductive agent which has recently become relatively readily available is excellent in antistatic property and exhibits a stable performance even when mixed with a hydrophobic antifouling agent. The carbon nanotubes may be available in the form of a single layer structure or a multilayer structure. In general, the carbon nanotubes having a single layer structure have a high conductivity but are more expensive. Therefore, in the present invention, the carbon nanotubes having a multilayer structure which is more inexpensive may be preferably used. It is convenient that the carbon nanotubes are dispersed together with a resin binder such as polyester resins, acrylic resins and urethane resins.

According to the present invention, by incorporating a fluorine-based repellant (antifouling agent) into a composition of the film, it is possible to provide a film capable of satisfying both an antifouling property and a printability with a good balance therebetween.

Further, according to the present invention, by incorporating a specific alkoxysilane compound, i.e., an alkyltrialkoxysilane, into the coating layer, it is possible to considerably improve a durability of the antistatic layer, in particular, a solvent resistance thereof, without any damage to an antistatic effect thereof. On the other hand, when incorporating a so-called silane coupling agent such as a generally used epoxy group- or amino group-containing compound into the coating layer, the resulting coating layer tends to be deteriorated in antistatic property and may fail to exhibit an improved durability. Examples of the preferred alkyltrialkoxysilane compound include decyltrimethoxysilane and octyltrimethoxysilane.

The coating solution forming the coating layer provided on the polyester film of the present invention may comprise a crosslinking agent for the purpose of improving an antiblocking property, a water resistance, a solvent resistance and a mechanical strength thereof. Examples of the crosslinking agent include methylolated or alkylolated urea-based compounds, melamine-based compounds, guanamine-based compounds, acrylamide-based compounds and polyamide-based compounds, epoxy compounds and aziridine-based compounds, (blocked) polyisocyanates, as well as heat-reactive, peroxide-reactive or photoreactive vinyl compounds and photosensitive resins. Also, in order to improve an antiblocking property or a slipping property of the film, the coating layer may also comprise inorganic fine particles such as particles of silica, silica sol, alumina, zirconium sol, kaolin, talc, calcium carbonate, titanium oxide, vanadium salts, carbon black, molybdenum sulfide and antimony oxide sol. The coating layer may also comprise the other additives, if required. Examples of the other additives include defoaming agents, coatability improvers, thickening agents, organic lubricants, organic polymer particles, antioxidants, ultraviolet absorbers, foaming agents and dyes. In addition, the coating solution for forming the antistatic layer according to the present invention may also comprise the other polymers than those contained in the above antistatic layer for the purpose of improving various properties of the coating solution or the resulting coating layer.

The contents of the respective components in the coating layer according to the present invention are as follows. That is, based on whole non-volatile components in the coating layer, the content of the carbon nanotubes in the coating layer is usually 1 to 30% by weight and preferably 2 to 20% by weight; the content of the fluorine-based repellant in the coating layer is usually 0.1 to 20% by weight and preferably 1 to 10% by weight; the content of the alkyltrialkoxysilane in the coating layer is usually 1 to 30% by weight and preferably 2 to 20% by weight; the content of the resin binder in the coating layer is usually 10 to 90% by weight and preferably 30 to 80% by weight; the content of the crosslinking agent in the coating layer is usually 0 to 50% by weight and preferably 5 to 30% by weight; and the content of the other additives in the coating layer is usually 0 to 50% by weight and preferably 0 to 20% by weight.

As the method of applying the above coating solution on the surface of the polyester film, there may be used coating methods as described in Yuji HARAZAKI, "Coating Methods", Maki-shoten, 1979, such as those methods using a reverse roll coater, a gravure coater, a rod coater, an air doctor blade coater, or the other coaters. The polyester film may also be subjected to chemical treatment or discharge treatment before applying the coating agent thereonto in order to improve a coatability, an adhesion property, etc., of the coating agent.

Examples of the solvent used for preparing the coating solution include aromatic hydrocarbons such as toluene; aliphatic hydrocarbons such as hexane and heptane; esters such as ethyl acetate and butyl acetate; ketones such as ethyl methyl ketone (MEK) and isobutyl methyl ketone; alcohols such as ethanol and 2-propanol; and ethers such as diisopropyl ether and dibutyl ether. These solvents may be used alone or in combination of any two or more thereof in view of a solubility, a coatability, a boiling point, etc. The solvent may be usually used in an amount of 5 to 50 times by weight the amount of the whole non-volatile components.

The thickness of the coating layer is not particularly limited, and is usually 0.005 to 0.25 *µ*m, preferably 0.01 to 0.1 *µ*m and more preferably 0.01 to 0.05 *µ*m. When the thickness of the antistatic layer is less than 0.005 *µ*m, it may be difficult to obtain a uniform coating layer, so that there tend to occur coating defects such as coating spots and cissing. When the thickness of the antistatic layer is more than 0.25 *µ*m, the resulting coating layer tends to be deteriorated in transparency.

The total light transmittance (TL) of the film according to the present invention is not particularly limited, and is usually not less than 80% and preferably not less than 85%. When TL of the film is not less than 80%, it is possible to desirably conduct inspection of a liquid crystal display panel accompanied with optical evaluation for display performance, hue and contrast of the liquid crystal display panel, inclusion of foreign matters therein while keeping the protecting film being attached onto a surface of the polarizing plate.

### EXAMPLES

The present invention is described in more detail below by the following Examples. However, these Examples are only illustrative and not intended to limit the present invention thereto, and other variations and modifications are possible unless they depart from the scope of the present invention. Meanwhile, the term "part(s)" appearing in the following Examples and Comparative Examples indicates "part(s) by weight". Also, the methods for measuring and evaluating various properties of the film as used in the present invention are as follows.

### (1) Adhesion property of coating film:

A cured layer was subjected to cross-cutting, and a 24 mm-wide Cellotape (registered trademark) tape produced by Nichiban Co., Ltd., was attached onto the cross-cut cured layer and then rapidly peeled off therefrom at a peel angle of 180° to measure an area of the cured layer peeled off together with the tape. The adhesion property was evaluated from the thus measured peeled-off area of the cured layer according to the following ratings.
A: No peeling was caused.
B: Peeled-off area of the cured layer was less than 15%.
C: Peeled-off area of the cured layer was not less than 15%.

### (2) Water-droplet contact angle:

A water-droplet contact angle of the film was measured by a liquid droplet method using a contact angle meter "CAD·A Model" manufactured by Kyowa Interface Science Co., Ltd. The water used for the measurement was pure water prepared by purifying water using an apparatus "MILLI-Q REAGENT-WATER-SYSTEM" manufactured by Millipore Corp. The time elapsed from dropping of a liquid droplet until initiation of the measurement was about 30 sec. The measurement was conducted six times, and an average value of the six contact angles thus measured was employed.

### (3) Turbidity of film:

The turbidity of the film was measured using an integration sphere turbidity meter "NDH-20D" manufactured by Nippon Denshoku Kogyo Co., Ltd., according to JIS K6714. The turbidity values of a coated film and a non-coated film as well as the difference between the turbidity values were measured, and the turbidity of the film was evaluated according to the following ratings.
A: The difference between the turbidity values of the films was less than 2.0%.
B: The difference between the turbidity values of the films was not less than 2.0% but less than 3%.
C: The difference between the turbidity values of the films was not less than 3%.

### (4) Antistatic property:

Using a high resistance meter "HP4339B" and a measuring electrode "HP16008B" both manufactured by Hewlett Packard Japan, Ltd., a surface resistivity of a sample film was measured after controlling a humidity of the sample film in a measuring atmosphere of 23°C and a predetermined humidity for 30 min and then applying a voltage of 100 V thereto for 1 min. The lower the surface resistivity, the more excellent the antistatic property of the film was.

### (5) Solvent resistance:

On the assumption that an adhesive deposited on the film was wiped off, a surface of a sample film was lightly rubbed with a gauze impregnated with ethanol in one direction thereof 10 times. Thereafter, in the same manner as the above procedure for measuring an antistatic property of the film, using a high resistance meter "HP4339B" and a measuring electrode "HP16008B" both manufactured by Hewlett Packard Japan, Ltd., a surface resistivity of the sample film was measured after controlling a humidity of the sample film in a measuring atmosphere of 23°C and 50% RH for 30 min and then applying a voltage of 100 V thereto for 1 min. The less the increase in surface resistivity between before and after the treatment, the more excellent the solvent resistance of the film was.

### (6) Water resistance:

A sample film was immersed in hot water at 65°C for 10 min. Then, in the same manner as the above procedure for measuring an antistatic property of the film, using a high resistance meter "HP4339B" and a measuring electrode "HP16008B" both manufactured by Hewlett Packard Japan, Ltd., a surface resistivity of the sample film was measured after controlling a humidity of the sample film in a measuring atmosphere of 23°C and 50% RH for 30 min and then applying a voltage of 100 V thereto for 1 min. The less the increase in surface resistivity between before and after the treatment, the more excellent the water resistance of the film was.

### (7) Printability:

Characters were printed on a surface of a cured resin using a stamp "Xstamper Quick-Drying Round Seal No. 11" manufactured by Shachihata Inc., to evaluate conditions of the printed characters according to the following ratings.
A: The characters of the stamp were clearly printed.
B: The characters printed were thinned owing to cissing, but practically acceptable.
C: The characters printed was suffered from severe cissing and were not distinguishable from each other.

### <Materials used>

As a dispersion of multi-wall carbon nanotubes in a polyester binder, there was used "DCNT-201S-2" (carbon nanotube content: 0.4%; non-volatile content: 3%) produced by Daido Corporation (hereinafter referred to merely as a "carbon nanotube dispersion").
As a crosslinking agent used in the coating layer, there was used a polyisocyanate curing agent for a carbon nanotube dispersion (non-volatile content: 45%) produced by Daido Corporation (hereinafter referred to merely as a "curing agent").
As a fluorine-based antifouling agent, there was used "DIFENSA MCF350SF" produced by DIC Corp.

### Example 1:

A 38 *µ*m-thick biaxially oriented PET film ("DIAFOIL T100-38" produced by Mitsubishi Plastics, Inc.) was coated with the following composition such that a coating amount thereof (before drying) was about 9.1 (g/m²). The thus obtained film was subjected to heat treatment at 140°C for 20 sec, thereby obtaining a coated film.

### <<Contents of composition>>

| | |
|---|---|
| Carbon nanotube dispersion | 80 parts by weight |
| Curing agent | 0.67 part by weight |
| Fluorine-based antifouling agent | 0.15 part by weight |
| Decyltrimethoxysilane ("KBM-3103C" produced by Shin-Etsu Chemical Co., Ltd.) | 0.15 part by weight |
| Methyl ethyl ketone | 300 parts by weight |
| Methyl isobutyl ketone | 300 parts by weight |

### Example 2:

The same procedure as in Example 1 was conducted except that the coating amount of the composition was changed to about 6.7 (g/m²), thereby obtaining a coated film.

### Example 3:

The same procedure as in Example 1 was conducted except that the composition was changed as follows, thereby obtaining a release film.

### <<Contents of composition>>

| | |
|---|---|
| Carbon nanotube dispersion | 70 parts by weight |
| Curing agent | 1.0 part by weight |
| Fluorine-based antifouling agent | 0.30 part by weight |
| Decyltrimethoxysilane ("KBM-3103C" produced by Shin-Etsu Chemical Co., Ltd.) | 0.15 part by weight |
| Methyl ethyl ketone | 210 parts by weight |
| Methyl isobutyl ketone | 210 parts by weight |

### Comparative Example 1:

The same procedure as in Example 1 was conducted except that the composition was changed as follows, thereby obtaining a release film.

### <<Contents of composition>>

| | |
|---|---|
| Carbon nanotube dispersion | 70 parts by weight |
| Curing agent | 1.0 part by weight |
| Fluorine-based antifouling agent | 0.30 part by weight |
| Glycidoxytrimethoxysilane ("KBM-403" produced by Shin-Etsu Chemical Co., Ltd.) | 0.15 part by weight |
| Methyl ethyl ketone | 210 parts by weight |
| Methyl isobutyl ketone | 210 parts by weight |

### Comparative Example 2:

The same procedure as in Example 1 was conducted except that the composition was changed as follows, thereby obtaining a release film.

### <<Contents of composition>>

| | |
|---|---|
| Carbon nanotube dispersion | 70 parts by weight |
| Curing agent | 1.0 part by weight |
| Fluorine-based antifouling agent | 0.30 part by weight |
| N-2-(Aminoethyl)-3-aminopropyltriethoxysilane ("KBM-603" produced by Shin-Etsu Chemical Co., Ltd.) | 0.15 part by weight |
| Methyl ethyl ketone | 210 parts by weight |
| Methyl isobutyl ketone | 210 parts by weight |

### Comparative Example 3:

The same procedure as in Example 1 was conducted except that the composition was changed as follows, thereby obtaining a release film.

### <<Contents of composition>>

| | |
|---|---|
| Carbon nanotube dispersion | 70 parts by weight |
| Curing agent | 1.0 part by weight |
| Fluorine-based antifouling agent | 0.30 part by weight |
| Methyl ethyl ketone | 210 parts by weight |
| Methyl isobutyl ketone | 210 parts by weight |

Various properties of the thus obtained films are collectively shown in Table 1 below.

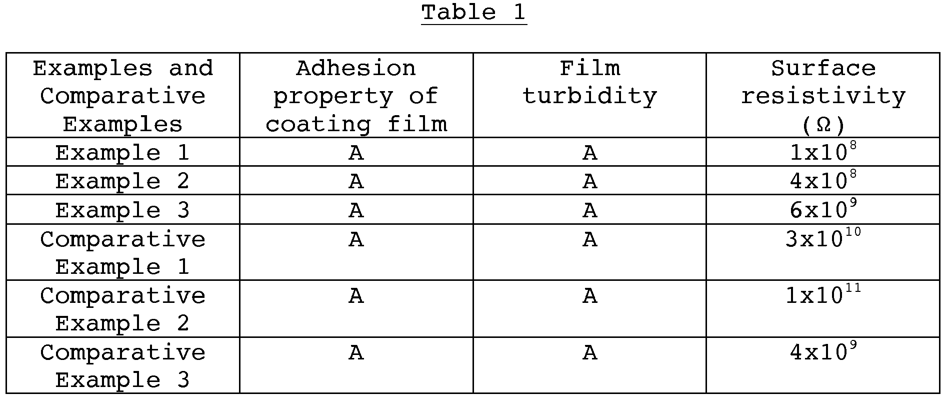

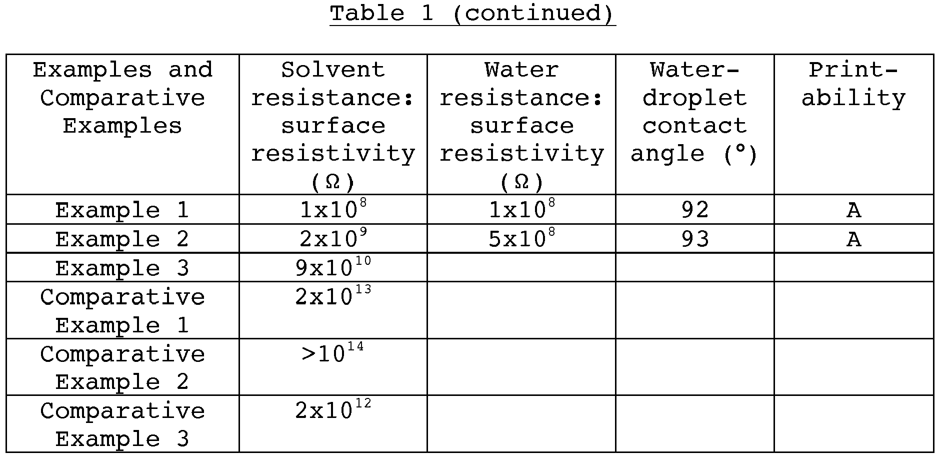

### INDUSTRIAL APPLICABILITY

The film of the present invention can be suitably used, for example, as a base material for a polarizing plate-protecting film for protecting a surface of a polarizing plate.

## Claims

1. A polyester film with coating layer comprising a polyester base film and a coating layer formed on at least one surface of the polyester base film, the coating layer comprising carbon nanotubes, a fluorine-based repellant and an alkyltrialkoxysilane compound.

2. The polyester film with coating layer according to claim 1, wherein the alkyltrialkoxysilane compound is decyltrimethoxysilane and/or octyltrimethoxysilane.

3. The polyester film with coating layer according to claim 1 or 2, wherein the coating layer comprises the carbon nanotubes, the fluorine-based repellant and the alkyltrialkoxysilane compound in an amount of 1 to 30% by weight, 0.1 to 20% by weight and 1 to 30% by weight, respectively, based on whole non-volatile components in the coating layer.

4. The polyester film with coating layer according to claim 1, wherein the coating layer further comprises a resin binder.

5. The polyester film with coating layer according to claim 4, wherein the coating layer comprises the resin binder in an amount of 10 to 90% by weight based on whole non-volatile components in the coating layer.

6. The polyester film with coating layer according to claim 1, wherein the coating layer further comprises a crosslinking agent.

7. The polyester film with coating layer according to claim 6, wherein the coating layer comprises the crosslinking agent in an amount of 5 to 50% by weight based on whole non-volatile components in the coating layer.
